# EUROPÄISCHE PATENTSCHRIFT

(11) **EP 4 299 962 B1**
(45) Veröffentlichungstag und Bekanntmachung des Hinweises auf die Patenterteilung: **10.12.2025**
(21) Anmeldenummer: 23182261.0
(22) Anmeldetag: 29.06.2023
(51) Int. Cl.: F16L 33/22

(54) **FLUIDANSCHLUSSEINRICHTUNG**
FLUID CONNECTION DEVICE
DISPOSITIF DE RACCORDEMENT FLUIDIQUE

(30) Priorität: 29.06.2022 DE 102022206571
(43) Veröffentlichungstag der Anmeldung: 03.01.2024
(73) Patentinhaber: Karasto Armaturenfabrik Oehler GmbH, 71522 Backnang (DE)
(72) Erfinder: RÖDLING, David, 71522 Backnang (DE); BUJARA, Thomas, 74248 Ellhofen (DE)
(74) Vertreter: Dietz, Christopher Friedrich

(56) Entgegenhaltungen:
- DE-A1- 3 147 665
- FR-A- 1 040 123
- US-A- 5 797 633

## Beschreibung

Die Erfindung betrifft eine Fluidanschlusseinrichtung, mit einer Schlauchtülle zur Herstellung einer strömungstechnischen Verbindung zwischen einer als Schlauchleitung ausgeführten Fluidleitung und der Fluidanschlusseinrichtung, mit einem die Schlauchtülle übergreifenden Spannelement und mit einem zwischen dem Spannelement und der Schlauchtülle angeordneten Spannring, der mittels des Spannelements in radialer Richtung bezüglich einer Längsmittelachse der Schlauchtülle zum klemmenden Halten der Fluidleitung zwischen dem Spannring und der Schlauchtülle komprimierbar ist.

Aus dem Stand der Technik ist beispielsweise die Druckschrift DE 1 775 302 A bekannt. Diese beschreibt eine Schlauchkupplung mit einem Schnellkupplungsteil zum Koppeln eines Schlauchendes mit einem Armaturenteil, bei dem ein Innenteil und ein Außenteil ineinandersteckbar sind, wobei das Innenteil eine Aussparung aufweist, in die im gekoppelten Zustand Einlegekörper, die in Durchbrüchen des Außenteils geführt sind, eindringen und durch Anlage an einer Schließfläche einer auf dem Außenteil geführten Hülse gegen Auskuppeln gesichert sind, während beim Auskuppeln Ausnehmungen in der Hülse in eine die Einlegekörper freigebende Lage bringbar sind. Dabei ist vorgesehen, dass an dem Einlegekörper eine radial gerichtete Federkraft angreift, um sie in die Aussparung des Innenteils zu drücken, und dass der Abstand zwischen der Schließfläche der Hülse und dem Innendurchmesser des Außenteils in radialer Richtung größer ist als die Einlegekörper, wobei diese von dem Innenteil gegen die Federkraft in die Ausnehmungen hineindrückbar sind, und im eingekuppelten Zustand die Aussparung hinterhaken, und sich zwischen dieser und der Schließfläche der Hülse verstemmen, dass die Einlegekörper mit einer Einlaufneigung versehen und im Wesentlichen axial unverschieblich sind.

Zudem sind aus der Druckschrift EP 3 114 384 B1 eine Schlauchkupplungsvorrichtung, aus der Druckschrift DE 31 47 665 A1 ein Verbindungsorgan für einen Schlauch, aus der Druckschrift US 5,884,943 eine Hülse eines Gartengeräts und aus der Druckschrift EP 0 879 982 A2 eine Drehkupplung bekannt.

Es ist Aufgabe der Erfindung, eine Fluidanschlusseinrichtung vorzuschlagen, welche gegenüber bekannten Fluidanschlusseinrichtungen Vorteile aufweist, insbesondere bei vor allem in axialer Richtung kompakter und platzsparender Ausgestaltung eine zuverlässige Anbindung von Fluidleitungen mit unterschiedlichen Abmessungen, insbesondere Innenabmessungen und/oder Außenabmessungen, ermöglicht.

Dies wird erfindungsgemäß mit einer Fluidanschlusseinrichtung mit den Merkmalen des Anspruchs 1 erreicht. Dabei ist vorgesehen, dass das Spannelement zwei in axialer Richtung bezüglich der Längsmittelachse beabstandete Endanschläge aufweist, zwischen welchen der Spannring verlagerbar angeordnet ist, wobei das Spannelement den Spannring in unterschiedlichen axialen Stellungen des Spannrings unterschiedlich weit in radialer Richtung komprimiert.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Die Fluidanschlusseinrichtung dient der strömungstechnischen Anbindung der als Schlauchleitung ausgeführten Fluidleitung, also einem Anschließen der Fluidleitung an die Fluidanschlusseinrichtung. Sie kann folglich auch als Schlauchanschlusseinrichtung bezeichnet werden. Die Fluidanschlusseinrichtung dient beispielsweise der strömungstechnischen Kopplung der Fluidleitung mit einer weiteren Fluidleitung beziehungsweise der strömungstechnischen Anbindung an diese. In diesem Fall kann die Fluidleitung als erste Fluidleitung und die weitere Fluidleitung als zweite Fluidleitung bezeichnet werden. Die Fluidanschlusseinrichtung kann jedoch auch Bestandteil einer strömungstechnischen Einrichtung sein und dient in diesem Fall der strömungstechnischen Anbindung der Fluidleitung an die strömungstechnische Einrichtung. Die Fluidleitung ist in jedem Fall als Schlauchleitung ausgestaltet. Die weitere Fluidleitung kann grundsätzlich in beliebiger Form vorliegen. Beispielsweise ist auch sie als Schlauchleitung ausgestaltet. Alternativ kann sie in Form einer Rohrleitung vorliegen. Die Rohrleitung zeichnet sich gegenüber der Schlauchleitung durch ihre starre Ausgestaltung aus, wohingegen die Schlauchleitung flexibel ist. Anders ausgedrückt ist die Schlauchleitung flexibler als die Rohrleitung.

Um die Fluidleitung strömungstechnisch mit der Fluidanschlusseinrichtung zu verbinden, verfügt die Fluidanschlusseinrichtung über die Schlauchtülle, das Spannelement und den Spannring. Die Schlauchtülle ist zum Aufschieben der Fluidleitung vorgesehen und ausgestaltet. Zum Herstellen der strömungstechnischen Verbindung wird also die Fluidleitung auf die Schlauchtülle aufgeschoben, sodass die Schlauchtülle in die Fluidleitung hineinragt. Hierunter ist konkret zu verstehen, dass die Schlauchtülle durch eine stirnseitige Mündungsöffnung der Fluidleitung in die Fluidleitung eingreift. Die Schlauchtülle weist vorzugsweise einen Außendurchmesser auf, welcher derart bemessen ist, dass die Schlauchtülle eine fluiddichte Verbindung zu der Fluidleitung herstellt, indem sie an einer Innenumfangsfläche der Fluidleitung fluiddicht oder zumindest im Wesentlichen fluiddicht anliegt.

Das Spannelement und der Spannring sind dazu vorgesehen und ausgestaltet, zum einen die Fluidleitung in axialer Richtung bezüglich der Längsmittelachse der Schlauchtülle an der Schlauchtülle festzusetzen und zum anderen die Fluidleitung in radialer Richtung auf die Schlauchtülle zu zu drängen, um die fluiddichte Verbindung zwischen der Fluidleitung und der Schlauchtülle zu schaffen und/oder zu erhalten. Das Spannelement dient dazu, den Spannring mit einer Spannkraft in radialer Richtung nach innen zu beaufschlagen, sodass der Spannring in Richtung der Fluidleitung beziehungsweise der Schlauchtülle komprimiert wird. Der Spannring wird hierbei mittels des Spannelements derart komprimiert, dass der Spannring in radialer Richtung von außen an der Fluidleitung angreift und diese in radialer Richtung nach innen auf die Schlauchtülle zu, insbesondere an die Schlauchtülle, drängt. Folglich wird der Spannring mithilfe des Spannelements derart komprimiert, dass die Fluidleitung zwischen dem Spannring und der Schlauchtülle klemmend gehalten ist. Hierdurch ist sowohl die Schlauchleitung in axialer Richtung bezüglich der Fluidleitung festgesetzt und zum anderen eine fluiddichte Verbindung zwischen der Schlauchtülle in der Fluidleitung geschaffen.

Um eine besonders flexible Fluidanschlusseinrichtung zu schaffen, welche die Anbindung von Fluidleitungen mit unterschiedlichen Abmessungen an die Schlauchtülle ermöglicht, weisen das Spannelement und der Spannring spezielle Ausgestaltungen auf. So verfügt das Spannelement über zwei Endanschläge, die in axialer Richtung voneinander beabstandet sind und zwischen welcher der Spannring verlagerbar ist. In einer ersten axialen Stellung des Spannrings liegt der Spannring an einem ersten der Endanschläge an und in einer zweiten axialen Stellung an einem zweiten der Endanschläge. In der ersten Stellung wird durch das Anliegen des Spannrings an dem ersten Endanschlag ein Verlagern des Spannrings über den ersten Endanschlag hinaus unterbunden, also in die von dem zweiten Endanschlag abgewandte Richtung. Umgekehrt unterbindet das Anliegen des Spannrings an dem zweiten Endanschlag ein Verlagern des Spannrings über den zweiten Endanschlag hinaus, nämlich in die von dem ersten Endanschlag abgewandte Richtung. Insoweit ist der Spannring in axialer Richtung lediglich zwischen den beiden Endanschlägen in axialer Richtung verlagerbar und entsprechend formschlüssig in dem Spannelement gehalten.

Weiterhin sind das Spannelement und der Spannring derart ausgestaltet, dass das Spannelement den Spannring in unterschiedlichen axialen Stellungen des Spannrings bezüglich des Spannelements unterschiedlich weit in radialer Richtung komprimiert. Das bedeutet beispielsweise, dass das Spannelement den Spannring in der ersten Stellung in radialer Richtung weniger weit komprimiert als in der zweiten Stellung oder umgekehrt. Insbesondere sind das Spannelement und der Spannring derart ausgestaltet, dass das Spannelement den Spannring umso weiter in radialer Richtung komprimiert, je weiter der Spannring aus der ersten Stellung in Richtung der zweiten Stellung ausgelenkt wird. Hierdurch ergibt sich eine flexible Anpassung der Fluidanschlusseinrichtung an die Schlauchleitung, da die Haltekraft, welche von dem Spannring auf die Schlauchleitung ausgeübt wird, von der axialen Stellung des Spannrings bezüglich des Spannelements abhängt. Bei einer Fluidleitung mit ersten Abmessungen wird insoweit beispielsweise die erste Stellung und bei einer Fluidleitung mit zweiten Abmessungen die zweite Stellung des Spannrings bezüglich des Spannelements verwendet, um ein zuverlässiges Halten der Fluidleitung zu erzielen.

Das Spannelement weist zwischen den beiden Endanschlägen eine konische Führungsfläche auf, an welcher der Spannring mit einer Führungsgegenfläche anliegt. Mithilfe der konischen Führungsfläche wird das unterschiedlich weite Komprimieren des Spannrings in seinen unterschiedlichen axialen Stellungen umgesetzt. Die Führungsfläche wird insbesondere von einer Innenumfangsfläche des Spannelements gebildet. Beispielsweise erstreckt sich die Führungsfläche im Längsschnitt gesehen von dem ersten Endanschlag bis hin zu dem zweiten Endanschlag. Es kann jedoch vorgesehen sein, dass die Führungsfläche in den ersten Endanschlag, den zweiten Endanschlag oder in beide Endanschläge jeweils über eine Rundung oder eine Fase übergeht. In diesem Fall liegt unmittelbar einerseits der Rundung beziehungsweise der Fase die Führungsfläche und unmittelbar andererseits der Endanschlag vor.

Die Führungsfläche ist konisch ausgestaltet, weist also in axialer Richtung gesehen einen sich verändernden Abstand zu der Längsmittelachse auf. Vorzugsweise ist die Führungsfläche symmetrisch zu der Längsmittelachse angeordnet, sodass eine Rotationsachse der als Rotationsfläche vorliegenden Führungsfläche der Längsmittelachse entspricht. Durch die konische Ausgestaltung der Führungsfläche wird ein leichtgängiges Verlagern des an der Führungsfläche anliegenden Spannrings erzielt. Der Spannring wirkt über die Führungsgegenfläche und die Führungsfläche mit dem Spannelement zusammen. Hierzu liegt die Führungsgegenfläche an der Führungsfläche des Spannelements an, insbesondere flächig. Vorzugsweise ist die Führungsgegenfläche ebenfalls konisch ausgestaltet, sodass sie über ihre gesamte Erstreckung in axialer Richtung und in Umfangsrichtung hinweg an der Führungsfläche anliegt, vorzugsweise durchgehend beziehungsweise ununterbrochen. Hierdurch wird ein Verkippen des Spannrings effektiv verhindert und ein zuverlässiges Komprimieren des Spannrings erzielt.

Bevorzugt ist der Spannring vorgespannt in dem Spannelement angeordnet. Aufgrund der konischen Führungsfläche und der Vorspannung wird der Spannring bezüglich des Spannelements in diejenige Stellung gedrängt, in welcher er die geringste Spannung aufweist beziehungsweise sich in radialer Richtung am weitesten ausdehnen kann. Entsprechend wandert er in axialer Richtung in diejenige Richtung, in welcher die Führungsfläche ihren größten Innendurchmesser aufweist. Bevorzugt ist die Vorspannung des Spannrings derart gewählt, dass er gegen den auf dieser Seite des Spannelements vorliegenden Endanschlag gedrängt wird. Hierdurch ist eine definierte Stellung des Spannrings bezüglich des Spannelements sichergestellt.

Eine Weiterbildung der Erfindung sieht vor, dass der Abstand zwischen den Endanschlägen in axialer Richtung um einen Faktor von mindestens 2,5, mindestens 5,0 oder mindestens 7,5 größer ist als eine Erstreckung des Spannrings, insbesondere der Führungsgegenfläche des Spannrings, in derselben Richtung. Um die Verlagerbarkeit des Spannrings zwischen den Endanschlägen sicherzustellen, ist der Abstand zwischen den Endanschlägen in axialer Richtung größer als die Erstreckung des Spannrings oder zumindest der Führungsgegenfläche des Spannrings in derselben Richtung. Um die bereits beschriebene Flexibilität der Fluidanschlusseinrichtung hinsichtlich der Abmessungen der Fluidleitung sicherzustellen, soll zwischen dem Abstand der Endanschläge und den Abmessungen des Spannrings beziehungsweise der Führungsgegenfläche mindestens einer der genannten Faktoren vorliegen. Zusätzlich oder alternativ ist der Abstand zwischen den Endanschlägen in axialer Richtung um einen Faktor von höchstens 15, höchstens 12,5 oder höchstens 10 größer als die Erstreckung des Spannrings beziehungsweise der Führungsgegenfläche in derselben Richtung. Auf die Vorteile der beschriebenen Ausgestaltung der Fluidanschlusseinrichtung wurde bereits hingewiesen.

Eine Weiterbildung der Erfindung sieht vor, dass der Spannring auf seiner in radialer Richtung der Schlauchtülle zugewandten Seite Haltekrallen zum Halten der Fluidleitung aufweist. Die Haltekrallen dienen dem Festsetzen der Fluidleitung in axialer Richtung und um die Fluidleitung in radialer Richtung nach innen auf die Schlauchtülle zu zu drängen. Die Haltekrallen sind in radialer Richtung nach innen gerichtet und bevorzugt in Umfangsrichtung voneinander beabstandet ausgestaltet, um eine gute Haltewirkung zu erzielen. Es kann vorgesehen sein, dass die Haltekrallen in radialer Richtung nach innen sich in axialer Richtung und/oder in Umfangsrichtung verjüngen, dass also in radialer Richtung nach innen ihre axialen Abmessungen und/oder ihre tangentialen Abmessungen abnehmen, sodass sie der Fluidleitung zugewandte Spitzen beziehungsweise Schneiden aufweisen. Hierdurch wird die Flächenpressung zwischen den Haltekrallen und der Fluidleitung erhöht.

Es kann vorgesehen sein, dass die Haltekrallen einreihig oder mehrreihig vorliegen. Bei der einreihigen Anordnung liegen die Haltekrallen im Längsschnitt gesehen in Überdeckung miteinander vor, sind also in axialer Richtung an derselben Position angeordnet. Sind die Haltekrallen mehrreihig angeordnet, so liegt ein erster Teil der Haltekrallen in einer ersten Reihe und ein zweiter Teil der Haltekrallen in einer zweiten Reihe vor, wobei die Haltekrallen der ersten Reihe in axialer Richtung gegenüber den Haltekrallen der zweiten Reihe versetzt angeordnet sind. Mithilfe der mehrreihigen Anordnung der Haltekrallen kann ihre Haltewirkung auf die Fluidleitung verbessert werden.

Eine Weiterbildung der Erfindung sieht vor, dass die Haltekrallen im Längsschnitt gesehen entgegen einem freien Ende der Schlauchtülle angewinkelt sind. Hierunter ist zu verstehen, dass die Haltekrallen in axialer Richtung von dem freien Ende fort geneigt sind, dass also in radialer Richtung innenseitige Enden der Haltekrallen von dem freien Ende fort weisen. Hierdurch wird einerseits ein Einbringen der Fluidleitung in den Spannring erleichtert und andererseits die von dem Spannring auf die Fluidleitung ausgeübte Haltekraft verbessert.

Eine Weiterbildung der Erfindung sieht vor, dass das Spannelement als Spannmutter ausgestaltet ist, die ein mit einem Außengewinde eines Kupplungskörpers der Fluidanschlusseinrichtung zusammenwirkendes Innengewinde aufweist. Der Kupplungskörper ist ebenso wie die Schlauchtülle, das Spannelement und der Spannring Bestandteil der Fluidanschlusseinrichtung. Vorzugsweise geht die Schlauchtülle von dem Kupplungskörper aus, erstreckt sich also in Richtung ihrer Längsmittelachse von diesem fort. Besonders bevorzugt sind die Schlauchtülle und der Kupplungskörper materialeinheitlich und/oder einstückig miteinander ausgestaltet. Insbesondere werden die Schlauchtülle und der Kupplungskörper gemeinsam miteinander hergestellt.

An dem Kupplungskörper ist das Außengewinde ausgestaltet, welches mit dem Innengewinde des Spannelements zusammenwirkt, um das Spannelement bezüglich des Kupplungskörpers und damit der Schlauchtülle in axialer Richtung festzusetzen. Anders ausgedrückt wird das Spannelement mit dem Kupplungskörper verschraubt beziehungsweise auf diesen aufgeschraubt. Hierdurch wird die Haltekraft beziehungsweise Klemmkraft des Spannrings auf die Fluidleitung eingestellt. Je weiter das Spannelement auf den Kupplungskörper aufgeschraubt wird, umso weiter wird der Spannring bezüglich des Spannelements in Richtung derjenigen Stellung verlagert, in welcher er von dem Spannelement in radialer Richtung nach innen stärker komprimiert wird. Durch das Aufschrauben des Spannelements auf den Kupplungskörper kann insoweit die Haltekraft auf einfache Art und Weise eingestellt werden.

Eine Weiterbildung der Erfindung sieht vor, dass der Spannring in Umfangsrichtung unterbrochen ist. Der Spannring ist geschlitzt und weist entsprechend in Umfangsrichtung zwei gegenüberliegende Enden beziehungsweise Stirnseiten auf, welche zumindest zeitweise voneinander beabstandet sind. Die Unterbrechung des Spannrings ermöglicht zum einen eine einfache Montage des Spannrings in dem Spannelement und zum anderen ein zuverlässiges und reversibles Komprimieren in Umfangsrichtung. Vorzugsweise sind die gegenüberliegenden Enden des Spannrings in Umfangsrichtung bei vollständig entspanntem Spannring voneinander entfernt.

Insbesondere ist der Spannring derart ausgestaltet, dass seine Enden in einer axialen Stellung des Spannrings, insbesondere bei an einem der Endanschläge anliegendem Spannring, voneinander beabstandet sind und in einer zweiten Stellung, insbesondere bei an dem jeweils anderen der Endanschläge anliegenden Spannring, aneinander anliegen oder zumindest einen kleineren Abstand voneinander aufweisen. Es kann also auch vorgesehen sein, dass der Spannring derart ausgestaltet ist, dass seine Enden in jeder Stellung des Spannrings bezüglich des Spannelements voneinander beabstandet sind. Hierdurch ist sichergestellt, dass der Spannring mit geringem Kraftaufwand zwischen den Endanschlägen verlagert werden kann.

Eine Weiterbildung der Erfindung sieht vor, dass die Schlauchtülle einen Spannabschnitt mit in einer von dem freien Ende der Schlauchtülle abgewandten Richtung zunehmendem Außendurchmesser aufweist. Unter dem Außendurchmesser der Schlauchtülle ist der Durchmesser eines Außenumfangs der Schlauchtülle zu verstehen. In dem Spannabschnitt nimmt der Außendurchmesser der Schlauchtülle zu, nämlich in die von dem freien Ende abgewandte Richtung. Anders ausgedrückt nimmt der Außendurchmesser der Schlauchtülle in dem Spannabschnitt in Richtung des Kupplungskörpers zu, von welchem die Schlauchtülle ausgeht.

Die Zunahme des Außendurchmessers erfolgt insbesondere durchgehend und stetig. Das bedeutet, dass in dem Spannabschnitt der Außendurchmesser durchgehend, also ohne Unterbrechung, zunimmt und hierbei keine Sprünge aufweist. Vorzugsweise nimmt der Außendurchmesser über den Spannabschnitt hinweg um mindestens 25 %, mindestens 30 %, mindestens 35 % oder mindestens 40 % zu. Das bedeutet, dass die Differenz zwischen dem größten Außendurchmesser und dem kleinsten Außendurchmesser bezogen auf den kleinsten Außendurchmesser wenigstens einem der genannten Werte entspricht.

Grundsätzlich kann die Zunahme des Außendurchmessers gleichmäßig erfolgen, also mit einem konstanten Durchmessergradient. In diesem Fall ist die Schlauchtülle in dem Spannabschnitt konisch beziehungsweise kegelförmig. Bevorzugt ändert sich der Durchmessergradient jedoch in axialer Richtung über den Spannabschnitt hinweg, insbesondere wird er in die von dem freien Ende abgewandte Richtung größer. Die Änderung des Durchmessergradients erfolgt vorzugsweise stetig, also ohne Sprung.

Beispielsweise nimmt der Durchmessergradient über den Spannabschnitt hinweg über mindestens 5 %, mindestens 10 % oder mindestens 20 % zu. Auch eine deutlich größere Vergrößerung, beispielsweise mit einem Faktor von mindestens 1,5, mindestens 2,0 oder mindestens 2,5 kann vorgesehen sein. Beispielsweise ist der Durchmessergradient über den gesamten Spannabschnitt hinweg von null verschieden. Bevorzugt ist jedoch eine Ausgestaltung, bei welcher der Durchmessergradient zunächst gleich null ist und sich ausgehend von null über den Spannabschnitt hinweg vergrößert.

Die Zunahme des Außendurchmessers ermöglicht eine besonders flexible Nutzung der Fluidanschlusseinrichtung mit Fluidleitungen, die unterschiedliche Durchmesser aufweisen. Eine Fluidleitung mit kleineren Abmessungen, insbesondere mit einem kleinen Innendurchmesser, kann aufgrund des zunehmenden Außendurchmessers weniger weit auf die Schlauchtülle aufgeschoben werden als eine Fluidleitung mit größeren Abmessungen, insbesondere einem größeren Innendurchmesser.

Eine Weiterbildung der Erfindung sieht vor, dass der Außendurchmesser der Schlauchtülle in dem Spannabschnitt in die von dem freien Ende abgewandte Richtung mit größer werdendem Durchmessergradient zunimmt. Der Durchmessergradient nimmt also - wie bereits erläutert - mit zunehmendem Abstand zu dem freien Ende zu, sodass entsprechend auch der Außendurchmesser schneller wächst. Es kann beispielsweise vorgesehen sein, dass der Durchmessergradient durchgehend von null verschieden ist oder ausgehend von null ansteigt. Im letzten Fall ist die Schlauchtülle in dem Spannabschnitt auf ihrer dem freien Ende zugewandten Seite zunächst zylinderförmig beziehungsweise kreiszylinderförmig. Mit einer solchen Ausgestaltung der Fluidanschlusseinrichtung wird trotz einer kompakten Ausgestaltung in axialer Richtung eine hohe Flexibilität hinsichtlich des Innendurchmessers der Fluidleitung erzielt.

Eine Weiterbildung der Erfindung sieht vor, dass der Durchmessergradient des Außendurchmessers über die Erstreckung des Spannabschnitts in axialer Richtung hinweg kleiner ist als ein Durchmessergradient eines Innendurchmessers der konischen Führungsfläche. Es wurde bereits hingewiesen, dass die Führungsfläche konisch ist, sodass auch sie in axialer Richtung mit einem von null verschiedenen Durchmessergradient ausgestaltet ist. Besonders bevorzugt ist der Durchmessergradient des Innendurchmessers der Führungsfläche in axialer Richtung durchgehend konstant, also ausgehend von einem der Endanschläge bis hin zu dem jeweils anderen der Endanschläge.

Der Durchmessergradient des Außendurchmessers kann ebenfalls konstant sein oder sich auf die beschriebene Art und Weise verändern, insbesondere in die von dem freien Ende abgewandte Richtung größer werden. In jedem Fall soll der Durchmessergradient über die gesamte Erstreckung des Spannabschnitts hinweg kleiner sein als der Durchmessergradient des Innendurchmessers. Das bedeutet, dass der radiale Abstand zwischen der Führungsfläche und der Schlauchtülle in axialer Richtung auf das freie Ende zu abnimmt, insbesondere durchgehend und stetig.

Hierdurch ist die Fluidleitung in axialer Richtung zuverlässig bezüglich der Fluidanschlusseinrichtung festgesetzt. Wird nämlich eine axiale Kraft auf die Fluidleitung ausgeübt, welche auf ein Abziehen von der Schlauchtülle gerichtet ist, so wird der Spannring gemeinsam mit der Fluidleitung in axialer Richtung auf das freie Ende der Schlauchtülle zu verlagert und hierbei zunehmend in radialer Richtung nach innen komprimiert. Entsprechend steigt die Klemmkraft beziehungsweise Haltekraft, welche der Spannring auf die Fluidleitung ausübt.

Eine Weiterbildung der Erfindung sieht vor, dass ein Kerndurchmesser des Innengewindes kleiner ist als ein kleinster Innendurchmesser der konischen Führungsfläche. Unter dem Kerndurchmesser ist der kleinste Durchmesser des Innengewindes über dessen Erstreckung in axialer Richtung hinweg zu verstehen. Der kleinste Innendurchmesser der Führungsfläche liegt insbesondere auf der dem Innengewinde abgewandten Seite des Spannelements vor. Hieraus ergibt sich eine Ausgestaltung des Spannelements, bei welcher der Innendurchmesser der Führungsfläche auf ihrer dem Innengewinde zugewandten Seite deutlich größer ist als der Kerndurchmesser, wobei sich der Innendurchmesser in die von dem Innengewinde abgewandte Richtung in Richtung des Kerndurchmessers verändert, diesen jedoch nicht erreicht oder allenfalls gerade erreicht. Mit einer solchen Ausgestaltung der Fluidanschlusseinrichtung wird in radialer Richtung hinreichend Platz für die Anordnung des Spannrings geschaffen.

Eine Weiterbildung der Erfindung sieht vor, dass auf einer dem freien Ende abgewandten Seite der Schlauchtülle das Außengewinde angeordnet ist und die Schlauchtülle in axialer Richtung zwischen dem Außengewinde und dem Spannabschnitt eine ringförmige Begrenzungsfläche aufweist. Die Schlauchtülle geht von dem Kupplungskörper aus, an welchem das Außengewinde ausgebildet ist. Die Schlauchtülle verfügt zusätzlich zu dem Spannabschnitt die Begrenzungsfläche, welche in axialer Richtung zwischen dem Außengewinde in dem Spannabschnitt vorliegt. Die Begrenzungsfläche ist ringförmig ausgestaltet und liegt beispielsweise stirnseitig an dem Kupplungskörper vor. Die Begrenzungsfläche ist bezüglich der der Längsmittelachse beziehungsweise bezüglich einer zu dieser parallelen Geraden angewinkelt, schließt mit ihr also einen Winkel ein, der größer als 0° und kleiner als 180° ist. Vorzugweise beträgt der Winkel mindestens 80° und höchstens 100°, mindestens 85° und höchstens 95° oder in etwa oder genau 90°.

Die Begrenzungsfläche dient dem Begrenzen eines Aufschiebens der Fluidleitung auf die Schlauchtülle in axialer Richtung und bildet insoweit einen Endanschlag für die Fluidleitung. Ein Innendurchmesser der Begrenzungsfläche entspricht dem maximalen Außendurchmesser der Schlauchtülle in ihrem Spannabschnitt oder ist größer als dieser. Ein Außendurchmesser der Begrenzungsfläche ist größer als ihr Innendurchmesser, beispielsweise um einen Faktor von mindestens 1,1, mindestens 1,15 oder mindestens 1,2. Hierdurch ist sichergestellt, dass die Fluidleitung nicht bis auf das Außengewinde geschoben werden kann, sodass Bedienungsfehler ausgeschlossen sind. Es kann vorgesehen sein, dass der Spannabschnitt unmittelbar in die Begrenzungsfläche einläuft, insbesondere im Längsschnitt unter einem bestimmten Winkel beziehungsweise unter Ausbildung einer Unstetigkeit. Bevorzugt geht der Spannabschnitt jedoch über eine Rundung oder eine Fase in die Begrenzungsfläche über. Diese Rundung oder Fase ist folglich in axialer Richtung gesehen zwischen dem Spannabschnitt und der Begrenzungsfläche angeordnet.

Eine Weiterbildung der Erfindung sieht vor, dass der Spannring in zumindest einer Stellung in radialer Richtung in Überdeckung mit der Begrenzungsfläche angeordnet ist. Das bedeutet, dass sich der Spannring in radialer Richtung soweit nach innen erstreckt, dass er in Überdeckung mit der Begrenzungsfläche vorliegt. Bevorzugt liegt der Spannring in jeder seiner axialen Stellungen mit der Begrenzungsfläche in Überdeckung. Hierdurch wird ein zuverlässiges Halten der Fluidleitung in axialer Richtung erzielt.

Eine Weiterbildung der Erfindung sieht vor, dass die Schlauchtülle an ihrem freien Ende einen Aufsteckabschnitt aufweist, wobei zwischen dem Aufsteckabschnitt und dem Spannabschnitt an der Schlauchtülle eine Stufung ausgebildet ist, sodass der Außendurchmesser der Schlauchtülle in dem Spannabschnitt auf seiner dem Aufsteckabschnitt zugewandten Seite kleiner ist als in dem Aufsteckabschnitt auf seiner dem Spannabschnitt zugewandten Seite. Um das Aufstecken der Fluidleitung auf die Schlauchtülle zu vereinfachen, ist bevorzugt der Außendurchmesser der Schlauchtülle in dem Aufsteckabschnitt auf seiner dem Spannabschnitt abgewandten Seite und folglich an dem freien Ende kleiner als der kleinste Außendurchmesser der Schlauchtülle in dem Spannabschnitt. Der Außendurchmesser der Schlauchtülle nimmt in axialer Richtung in dem Aufsteckabschnitt in die von dem freien Ende abgewandte Richtung zu, nämlich bis auf einen Außendurchmesser, der größer ist als der kleinste Außendurchmesser des Spannabschnitts.

Der Aufsteckabschnitt geht über die Stufung in den Spannabschnitt über, sodass eine schlagartige Reduzierung des Außendurchmessers vorliegt. Das bedeutet, dass der Aufsteckabschnitt im Längsschnitt gesehen auf seiner dem Spannabschnitt zugewandten Seite außenseitig eine Kante mit einem spitzen Winkel aufweist, die mit einer Innenumfangsfläche der Fluidleitung zusammenwirkt, um die Fluidleitung in axialer Richtung bezüglich der Fluidanschlusseinrichtung festzusetzen. Aufgrund der Stufung ist der Außendurchmesser der Schlauchtülle in dem Aufsteckabschnitt auf dessen dem Spannabschnitt zugewandten Ende größer als der Außendurchmesser der Schlauchtülle in dem Spannabschnitt auf dessen dem Aufsteckabschnitt zugewandten Ende.

Durch eine beschriebene Ausgestaltung erleichtert der Aufsteckabschnitt zum einen das Aufstecken der Fluidleitung auf die Schlauchtülle und zum anderen verbessert er die Haltewirkung auf sie. In axialer Richtung gesehen ist der Aufsteckabschnitt zumindest bereichsweise zwischen den Endanschlägen angeordnet. Nähert sich nun der Spannring dem Aufsteckabschnitt in axialer Richtung, so wird die Haltekraft auf die Fluidleitung durch eine plötzliche Abnahme der Differenz zwischen dem Innendurchmesser der der Führungsfläche und dem Außendurchmesser der Schlauchtülle schlagartig erhöht, sodass die Fluidleitung zuverlässig gehalten ist.

Eine Weiterbildung der Erfindung sieht vor, dass die Schlauchtülle in dem Aufsteckabschnitt konisch ist. Das bedeutet, dass der Außendurchmesser der Schlauchtülle in dem Aufsteckabschnitt zumindest bereichsweise, insbesondere durchgehend, mit konstantem Durchmessergradient zunimmt. Dies erleichtert das Aufstecken der Fluidleitung auf die Schlauchtülle.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Der Schutzbereich der Erfindung wird durch die beigefügten Ansprüche bestimmt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung einer Fluidanschlusseinrichtung mit einer Schlauchtülle, einem Spannelement und einem Spannring,
- Figur 2: eine schematische Darstellung eines Kupplungskörpers sowie der von dem Kupplungskörper ausgehenden Schlauchtülle,
- Figur 3: eine schematische Darstellung des Spannrings,
- Figur 4: eine schematische Längsschnittdarstellung der Fluidanschlusseinrichtung mit einer an ihr angeordneten Fluidleitung mit einem größeren ersten Außendurchmesser, sowie
- Figur 5: eine weitere schematische Längsschnittdarstellung der Fluidanschlusseinrichtung, wobei die an ihr angeordnete Fluidleitung einen kleineren zweiten Außendurchmesser aufweist.

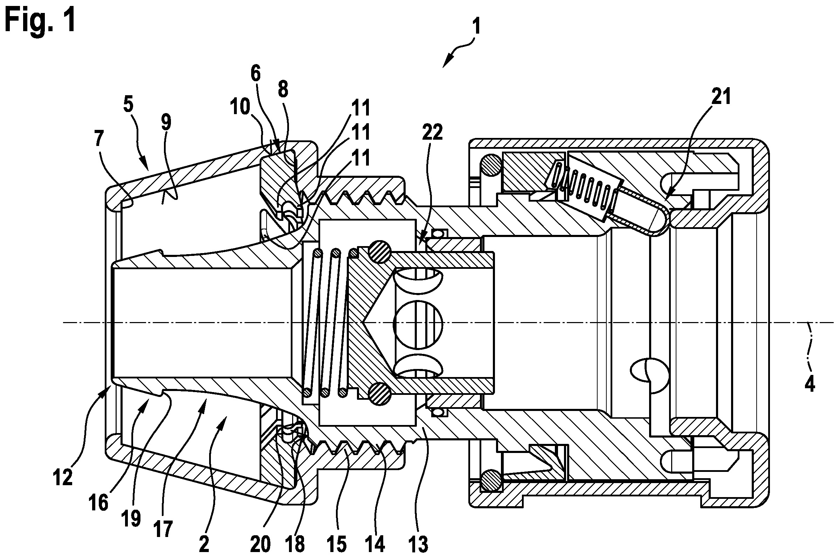

Die Figur 1 zeigt eine schematische Längsschnittdarstellung einer Fluidanschlusseinrichtung 1, welche in dem hier dargestellten Ausführungsbeispiel als Schlauchkupplungseinrichtung ausgestaltet ist. Die Fluidanschlusseinrichtung 1 verfügt über eine Schlauchtülle 2 zur strömungstechnischen Anbindung einer hier nicht dargestellten Fluidleitung 3. Die Schlauchtülle 2 ist in axialer Richtung bezüglich einer Längsmittelachse 4 der Schlauchtülle 2 gesehen von einem Spannelement 5 und einem Spannring 6 übergriffen, wobei sich das Spannelement 5 und der Spannring zumindest teilweise in Umfangsrichtung um die Schlauchtülle 2 erstrecken. Die Schlauchtülle 2, das Spannelement 5 und der Spannring 6 wirken zusammen, um die Fluidleitung 3 zum einen strömungstechnisch an die Fluidanschlusseinrichtung 1 fluiddicht anzubinden und zum anderen die Fluidleitung 3 in axialer Richtung bezüglich der Längsmittelachse 4 festzusetzen beziehungsweise an der Fluidanschlusseinrichtung 1 zu halten. Im Längsschnitt gesehen liegt der Spannring 6 zwischen dem Spannelement 5 und der Schlauchtülle 2 vor. Er wird von dem Spannelement 5 in radialer Richtung nach innen auf die Fluidleitung 3 gedrängt, sodass er auf sie eine Haltekraft ausübt und sie an der Schlauchtülle 2 klemmend hält. Hierzu ist der Spannring 6 in radialer Richtung komprimierbar.

Das Spannelement 5 weist zwei in axialer Richtung bezüglich der Längsmittelachse 4 voneinander beabstandete Endanschläge 7 und 8 auf, zwischen welchen der Spannring 6 in axialer Richtung verlagerbar ist. Die Endanschläge 7 und 8 weisen insoweit in axialer Richtung einen Abstand voneinander auf, welcher größer ist als eine Erstreckung des Spannrings 6 in axialer Richtung. Es ist vorgesehen, dass der Spannring 6 in einer ersten axialen Stellung an dem Endanschlag 7 und in einer zweiten axialen Stellung an dem Endanschlag 8 anliegt, wobei die beiden Stellungen voneinander verschieden sind.

Das Spannelement 5 und der Spannring 6 sind derart ausgestaltet, dass das Spannelement 5 den Spannring 6 in unterschiedlichen axialen Stellungen des Spannrings 6 bezüglich des Spannelements 5 unterschiedlich weit in radialer Richtung komprimiert. Hierzu verfügt das Spannelement 5 über eine konische Führungsfläche 9, an welcher eine ebenfalls konische Führungsgegenfläche 10 des Spannrings 6 flächig anliegt. Aufgrund ihrer konischen Ausgestaltung verändert sich ein Innendurchmesser der Führungsfläche 9 in axialer Richtung mit einem konstanten Durchmessergradient, die Steigung der Führungsfläche 9 ist insoweit über ihre gesamte Erstreckung in axialer Richtung hinweg gleich.

Der Spannring 6 verfügt auf seiner in radialer Richtung der Schlauchtülle 2 zugewandten Seite mehrere Haltekrallen 11, von welchen hier lediglich einige beispielhaft gekennzeichnet sind. Die Haltekrallen 11 sind in dem dargestellten Ausführungsbeispiel mehrreihig, insbesondere zweireihig angeordnet, liegen also in mehreren in axialer Richtung versetzten Reihen vor. Die Haltekrallen 11 sind im Längsschnitt gesehen in eine von einem freien Ende 12 der Schlauchtülle 2 fortgewandte Richtung geneigt, um eine gute Haltewirkung auf die Fluidleitung 3 zu erzielen. An die Schlauchtülle 2 schließt sich ein Kupplungskörper 13 der Fluidanschlusseinrichtung 1 an. Vorzugsweise ist der Kupplungskörper 3 einstückig und/oder materialeinheitlich mit der Schlauchtülle 2 ausgeführt. An dem Kupplungskörper 3 liegt ein Außengewinde 14 vor, das in ein Innengewinde 15 des Spannelements 5 eingreift. Das Außengewinde 14 und das Innengewinde 15 wirken insoweit zusammen, um das Spannelement 5 in axialer Richtung bezüglich des Kupplungskörpers 13 und mithin der Schlauchtülle 2 festzusetzen. Mithilfe der Gewinde 14 und 15 kann das Spannelement 5 jedoch in unterschiedlichen Stellungen bezüglich des Kupplungskörpers 13 und mithin der Schlauchtülle 2 angeordnet werden, nämlich durch Auf- oder Abschrauben des Spannelements 5 auf beziehungsweise von dem Kupplungskörper 13.

Die Schlauchtülle 2 weist ausgehend von ihrem freien Ende 12 einen Aufsteckabschnitt 16, einen Spannabschnitt 17 sowie eine Begrenzungsfläche 18 auf. In dem Aufsteckabschnitt 16 vergrößert sich zunächst der Außendurchmesser der Schlauchtülle 2 ausgehend von dem freien Ende 12 in Richtung des Kupplungskörpers 13, vorzugsweise mit einem konstanten Durchmessergradient, sodass die Schlauchtülle 2 in dem Aufsteckabschnitt 16 zumindest bereichsweise konisch ist. Der Aufsteckabschnitt 16 geht über eine Stufung 19 in den Spannabschnitt 17 über, wobei sich der Außendurchmesser der Schlauchtülle 2 im Bereich der Stufung 19 schlagartig verringert. Das bedeutet, dass der Außendurchmesser der Schlauchtülle 2 in dem Aufsteckabschnitt 16 auf seiner unmittelbar an die Stufung 19 angrenzenden Seite größer ist als der Außendurchmesser der Schlauchtülle 2 in dem Spannabschnitt 17 auf seiner der Stufung 19 zugewandten Seite.

In dem Spannabschnitt 17 vergrößert sich der Außendurchmesser der Schlauchtülle 2 in die von dem freien Ende 12 abgewandte und auf den Kupplungskörper 13 zugewandte Richtung. Der Durchmessergradient des Außendurchmessers ist hierbei jedoch nicht konstant, sondern vergrößert sich ebenfalls in in die von dem freien Ende 12 abgewandte Richtung, sodass sich der Außendurchmesser mit steigendem Abstand zu dem freien Ende 12 rascher vergrößert. Unter dem Durchmessergradient ist insbesondere der Gradient des Außendurchmessers in axialer Richtung zu verstehen, also über eine Streckeneinheit in axialer Richtung.

Es ist erkennbar, dass der Durchmessergradient des Außendurchmessers der Schlauchtülle 2 in dem Spannabschnitt 17 durchgehend kleiner ist als der Durchmessergradient des Innendurchmessers der Führungsfläche 9 des Spannelements 5. Folglich verringert sich der Abstand in radialer Richtung zwischen der Führungsfläche 9 und der Schlauchtülle 2 in Richtung des freien Endes 12 durchgehend. Beispielsweise entspricht der Durchmessergradient des Außendurchmessers der Schlauchtülle 2 in dem Aufsteckabschnitt 16 dem Durchmessergradient des Innendurchmessers der Führungsfläche 9. Es ist ersichtlich, dass der Spannabschnitt 17 über eine Rundung 20 in die Begrenzungsfläche 18 übergeht. Diese Rundung 20 ist nicht mehr Teil des Spannabschnitts 17, sondern von diesem verschieden.

Zusätzlich zu den bereits genannten Elementen verfügt die Fluidanschlusseinrichtung 1 in dem hier dargestellten Ausführungsbeispiel über eine Rasteinrichtung 21 zur Verrastung mit einem hier nicht gezeigten Fluidkupplungsstecker sowie über eine Rückschlagventileinrichtung 22.

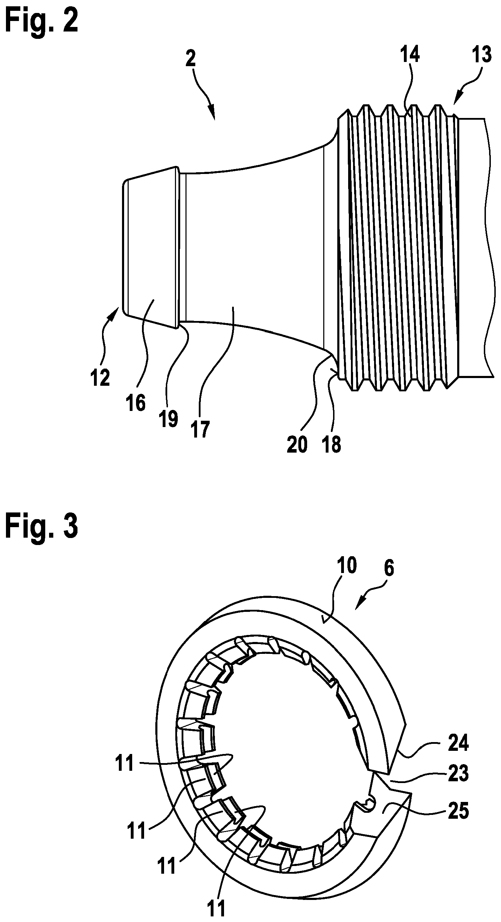

Die Figur 2 zeigt eine schematische Darstellung der Schlauchtülle 2 und des Kupplungskörpers 13. Es wird auf die Ausführungen im Rahmen dieser Beschreibung Bezug genommen.

Die Figur 3 zeigt eine schematische Darstellung des Spannrings 6. Erkennbar sind insbesondere die Führungsgegenfläche 10 und die Haltekrallen 11, von welchen wiederum lediglich einige beispielhaft gekennzeichnet sind. Es wird zudem deutlich, dass der Spannring 6 in Umfangsrichtung unterbrochen ist, sodass ein Spalt 23 zwischen voneinander beabstandeten Stirnseiten 24 und 25 des Spannrings 6 vorliegt. Gezeigt ist der Spannring 6 in vollständig entspanntem Zustand. Der Spalt 23 ermöglicht ein einfaches Komprimieren des Spannrings 6 in radialer Richtung mittels des Spannelements 5 ohne übermäßigen Kraftaufwand sowie eine einfache Montage des Spannrings 6 in dem Spannelement 5.

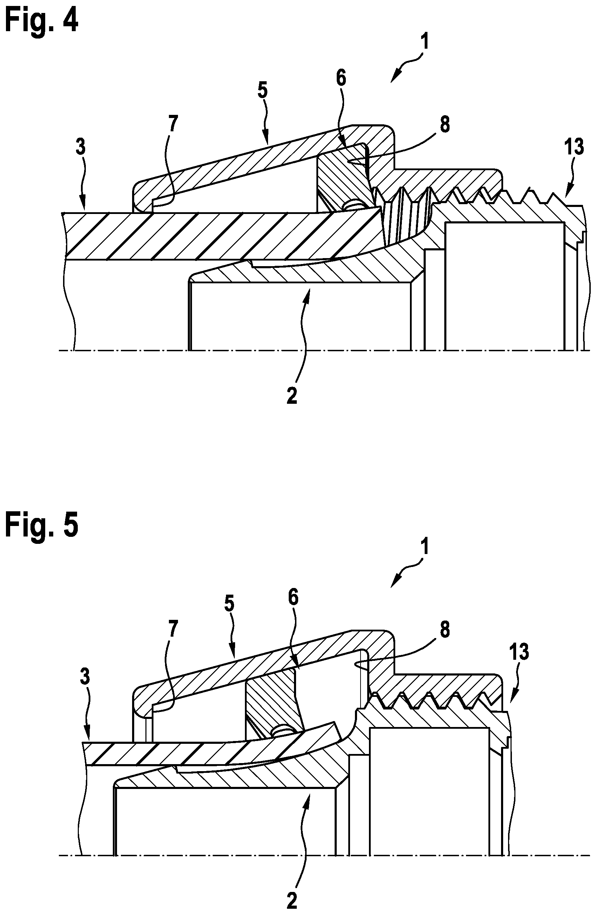

Die Figur 4 zeigt eine schematische Längsschnittdarstellung der Fluidanschlusseinrichtung 1 sowie einer Fluidleitung 3, wobei die Fluidleitung 3 einen größeren ersten Außendurchmesser aufweist. In der Figur 5 ist hingegen die schematische Darstellung der Fluidanschlusseinrichtung 1 und der Fluidleitung 3 für eine Fluidleitung 3 mit einem kleineren zweiten Außendurchmesser dargestellt. Aus einem Vergleich der Figuren 4 und 5 ergibt sich die Funktionsweise der Fluidanschlusseinrichtung 1 unmittelbar: Durch unterschiedlich weites Aufschrauben des Spannelements 5 auf den Kupplungskörper 13 sowie durch unterschiedliche Stellungen des Spannrings 6 bezüglich des Spannelements 5 werden die unterschiedlichen Außendurchmesser der Fluidleitungen 3 ausgeglichen, sodass in jedem Fall ein zuverlässiges Halten der jeweiligen Fluidleitung 3 an der Fluidanschlusseinrichtung 1 sichergestellt ist. Hierdurch ergibt sich eine äußerst flexible Handhabung der Fluidanschlusseinrichtung 1, da diese mit Fluidleitungen 3 unterschiedlicher Abmessungen verwendbar ist. Insbesondere können sich die Fluidleitungen 3 hinsichtlich ihres Innendurchmessers, ihres Außendurchmessers und/oder ihrer Wandstärke unterscheiden. In jedem Fall kann die Fluidleitung 3 durch unterschiedliche Stellungen des Spannrings 6 zuverlässig an die Schlauchtülle 2 gedrängt werden, sodass sie zum einen dicht an dieser anliegt und zum anderen ein unbeabsichtigtes Entfernen in axialer Richtung unterbunden wird.

### BEZUGSZEICHENLISTE

- 1: Fluidanschlusseinrichtung
- 2: Schlauchtülle
- 3: Fluidleitung
- 4: Längsmittelachse
- 5: Spannelement
- 6: Spannring
- 7: Endanschlag
- 8: Endanschlag
- 9: Führungsfläche
- 10: Führungsgegenfläche
- 11: Haltekralle
- 12: freies Ende
- 13: Kupplungskörper
- 14: Außengewinde
- 15: Innengewinde
- 16: Aufsteckabschnitt
- 17: Spannabschnitt
- 18: Begrenzungsfläche
- 19: Stufung
- 20: Rundung
- 21: Rasteinrichtung
- 22: Rückschlagventileinrichtung
- 23: Spalt
- 24: Stirnseite
- 25: Stirnseite

## Patentansprüche

1. Fluidanschlusseinrichtung (1), mit einer Schlauchtülle (2) zur Herstellung einer strömungstechnischen Verbindung zwischen einer als Schlauchleitung ausgeführten Fluidleitung (3) und der Fluidanschlusseinrichtung (1), mit einem die Schlauchtülle (2) übergreifenden Spannelement (5) und mit einem zwischen dem Spannelement (5) und der Schlauchtülle (2) angeordneten Spannring (6), der mittels des Spannelements (5) in radialer Richtung bezüglich einer Längsmittelachse (4) der Schlauchtülle (2) zum klemmenden Halten der Fluidleitung (3) zwischen dem Spannring (6) und der Schlauchtülle (2) komprimierbar ist, wobei das Spannelement (5) zwei in axialer Richtung bezüglich der Längsmittelachse (4) beabstandete Endanschläge (7, 8) aufweist, zwischen welchen der Spannring (6) verlagerbar angeordnet ist, wobei das Spannelement (5) den Spannring (6) in unterschiedlichen axialen Stellungen des Spannrings (6) unterschiedlich weit in radialer Richtung komprimiert, **dadurch gekennzeichnet, dass** das Spannelement (5) zwischen den beiden Endanschlägen (7, 8) eine konische Führungsfläche (9) aufweist, an welcher der Spannring (6) mit einer Führungsgegenfläche (10) anliegt.

2. Fluidanschlusseinrichtung nach Anspruch 1, **dadurch gekennzeichnet, dass** der Abstand zwischen den Endanschlägen (7, 8) in axialer Richtung um einen Faktor von mindestens 2,5, mindestens 5,0 oder mindestens 7,5 größer ist als eine Erstreckung des Spannrings (6) in derselben Richtung.

3. Fluidanschlusseinrichtung nach einem der vorhergehenden Ansprüche, **dadurch gekennzeichnet, dass** der Spannring (6) auf seiner in radialer Richtung der Schlauchtülle (2) zugewandten Seite Haltekrallen (11) zum Halten der Fluidleitung (3) aufweist.

4. Fluidanschlusseinrichtung nach Anspruch 3, **dadurch gekennzeichnet, dass** die Haltekrallen (11) im Längsschnitt gesehen entgegen einem freien Ende (12) der Schlauchtülle (2) angewinkelt sind.

5. Fluidanschlusseinrichtung nach einem der vorhergehenden Ansprüche, **dadurch gekennzeichnet, dass** das Spannelement (5) als Spannmutter ausgestaltet ist, die ein mit einem Außengewinde (14) eines Kupplungskörpers (13) der Fluidanschlusseinrichtung (1) zusammenwirkendes Innengewinde (15) aufweist.

6. Fluidanschlusseinrichtung nach einem der vorhergehenden Ansprüche, **dadurch gekennzeichnet, dass** der Spannring (6) in Umfangsrichtung unterbrochen ist.

7. Fluidanschlusseinrichtung nach einem der vorhergehenden Ansprüche, **dadurch gekennzeichnet, dass** die Schlauchtülle (2) einen Spannabschnitt (17) mit in einer von dem freien Ende (12) der Schlauchtülle (2) abgewandten Richtung zunehmendem Außendurchmesser aufweist.

8. Fluidanschlusseinrichtung nach Anspruch 7, **dadurch gekennzeichnet, dass** der Außendurchmesser der Schlauchtülle (2) in dem Spannabschnitt (17) in die von dem freien Ende (12) abgewandte Richtung mit größer werdendem Durchmessergradient zunimmt.

9. Fluidanschlusseinrichtung nach Anspruch 7 oder 8, **dadurch gekennzeichnet, dass** der Durchmessergradient des Außendurchmessers über die Erstreckung des Spannabschnitts (17) in axialer Richtung hinweg kleiner ist als ein Durchmessergradient eines Innendurchmessers der konischen Führungsfläche (9).

10. Fluidanschlusseinrichtung nach einem der Ansprüche 5 bis 9, **dadurch gekennzeichnet, dass** ein Kerndurchmesser des Innengewindes (15) kleiner ist als ein kleinster Innendurchmesser der konischen Führungsfläche (9).

11. Fluidanschlusseinrichtung nach einem der Ansprüche 7 bis 10, **dadurch gekennzeichnet, dass** auf einer dem freien Ende (12) abgewandten Seite der Schlauchtülle (2) das Außengewinde (14) angeordnet ist und die Schlauchtülle (2) in axialer Richtung zwischen dem Außengewinde (14) und dem Spannabschnitt (17) eine ringförmige Begrenzungsfläche (18) aufweist.

12. Fluidanschlusseinrichtung nach Anspruch 11, **dadurch gekennzeichnet, dass** der Spannring (6) in zumindest einer Stellung in radialer Richtung in Überdeckung mit der Begrenzungsfläche (18) angeordnet ist.

13. Fluidanschlusseinrichtung nach einem der Ansprüche 7 bis 12, **dadurch gekennzeichnet, dass** die Schlauchtülle (2) an ihrem freien Ende (12) einen Aufsteckabschnitt (16) aufweist, wobei zwischen dem Aufsteckabschnitt (16) und dem Spannabschnitt (17) an der Schlauchtülle (2) eine Stufung (19) ausgebildet ist, sodass der Außendurchmesser der Schlauchtülle (2) in dem Spannabschnitt (17) auf seiner dem Aufsteckabschnitt (16) zugewandten Seite kleiner ist als in dem Aufsteckabschnitt (16) auf seiner dem Spannabschnitt (17) zugewandten Seite.

14. Fluidanschlusseinrichtung nach Anspruch 13, **dadurch gekennzeichnet, dass** die Schlauchtülle (2) in dem Aufsteckabschnitt (16) konisch ist.

## Claims

1. Fluid connection device (1), with a hose nozzle (2) for establishing a fluid connection between a fluid line (3) configured as a hose line and the fluid connection device (1), with a clamping element (5) engaging over the hose nozzle (2) and with a clamping ring (6) arranged between the clamping element (5) and the hose nozzle (2), which can be compressed by means of the clamping element (5) in radial direction relative to a longitudinal central axis (4) of the hose nozzle (2) in order to retain the fluid line (3) between the clamping ring (6) and the hose nozzle (2) by clamping, wherein the clamping element (5) has two end stops (7, 8) spaced apart in axial direction relative to the longitudinal central axis (4), between which the clamping ring (6) is arranged so as to be moveable, wherein the clamping element (5) compresses the clamping ring (6) to different degrees in the radial direction in different axial positions of the clamping ring (6), **characterised in that** the clamping element (5) comprises a conical guide surface (9) between the two end stops (7, 8), against which the clamping ring (6) rests with a guide counter surface (10).

2. Fluid connection device according to claim 1, **characterised in that** the distance between the end stops (7, 8) in axial direction is greater than an extent of the clamping ring (6) in the same direction by a factor of at least 2.5, at least 5.0 or at least 7.5.

3. Fluid connection device according to one of the preceding claims, **characterised in that** the clamping ring (6) comprises retaining claws (11) on its side facing the hose nozzle (2) in radial direction for retaining the fluid line (3).

4. Fluid connection device according to claim 3, **characterised in that** the retaining claws (11) are angled away from a free end (12) of the hose nozzle (2) when viewed in longitudinal section.

5. Fluid connection device according to one of the preceding claims, **characterised in that** the clamping element (5) is configured as a clamping nut which comprises an internal thread (15) interacting with an external thread (14) of a coupling body (13) of the fluid connection device (1).

6. Fluid connection device according to one of the preceding claims, **characterised in that** the clamping ring (6) is interrupted in circumferential direction.

7. Fluid connection device according to one of the preceding claims, **characterised in that** the hose nozzle (2) comprises a clamping section (17) with an outer diameter that increases in a direction away from the free end (12) of the hose nozzle (2).

8. Fluid connection device according to claim 7, **characterised in that** the outer diameter of the hose nozzle (2) in the clamping section (17) increases in the direction away from the free end (12) with an increasing diameter gradient.

9. Fluid connection device according to claim 7 or 8, **characterised in that** the diameter gradient of the outer diameter over the extent of the clamping section (17) in the axial direction is smaller than a diameter gradient of an inner diameter of the conical guide surface (9).

10. Fluid connection device according to one of claims 5 to 9, **characterised in that** a core diameter of the internal thread (15) is smaller than a smallest internal diameter of the conical guide surface (9).

11. Fluid connection device according to one of claims 7 to 10, **characterised in that** the external thread (14) is arranged on a side of the hose nozzle (2) facing away from the free end (12) and the hose nozzle (2) comprises an annular boundary surface (18) in axial direction between the external thread (14) and the clamping section (17).

12. Fluid connection device according to claim 11, **characterised in that** the clamping ring (6) is arranged in at least one position in radial direction in alignment with the boundary surface (18).

13. Fluid connection device according to one of claims 7 to 12, **characterised in that** the hose nozzle (2) comprises a attachment section (16) at its free end (12), wherein a step (19) is formed between the attachment section (16) and the clamping section (17) on the hose nozzle (2) such that the outer diameter of the hose nozzle (2) in the clamping section (17) is smaller on its side facing the attachment section (16) than in the attachment section (16) on its side facing the clamping section (17).

14. Fluid connection device according to claim 13, **characterised in that** the hose nozzle (2) is conical in the attachment section (16).

## Revendications

1. Dispositif de raccordement fluidique (1), comprenant un raccord pour flexible (2) permettant de créer une liaison fluidique entre une conduite de fluide (3) réalisée sous forme de tuyau et le dispositif de raccordement fluidique (1), comprenant un élément de serrage (5) recouvrant le raccord pour flexible (2), et comprenant une bague de serrage (6) agencée entre l'élément de serrage (5) et le raccord pour flexible (2) et qui peut être comprimée au moyen de l'élément de serrage (5) dans la direction radiale par rapport à un axe médian longitudinal (4) du raccord pour flexible (2) afin de retenir par serrage la conduite de fluide (3) entre la bague de serrage (6) et le raccord pour flexible (2), dans lequel l'élément de serrage (5) présente deux butées d'extrémité (7, 8) espacées dans la direction axiale par rapport à l'axe médian longitudinal (4) et entre lesquelles la bague de serrage (6) est agencée de manière à pouvoir être déplacée, dans lequel l'élément de serrage (5), dans des positions axiales différentes de la bague de serrage (6), comprime la bague de serrage (6) avec une amplitude différente dans la direction radiale, **caractérisé en ce que** l'élément de serrage (5) présente entre les deux butées d'extrémité (7, 8) une surface de guidage conique (9) au niveau de laquelle la bague de serrage (6) est agencée contre une contre-surface de guidage (10).

2. Dispositif de raccordement fluidique selon la revendication 1, **caractérisé en ce que** la distance entre les butées d'extrémité (7, 8) dans la direction axiale est supérieure d'un facteur d'au moins 2,5, d'au moins 5,0 ou d'au moins 7,5 à une étendue de la bague de serrage (6) dans la même direction.

3. Dispositif de raccordement fluidique selon l'une quelconque des revendications précédentes, **caractérisé en ce que** la bague de serrage (6) présente, sur son côté tourné vers le raccord pour flexible (2) dans la direction radiale, des griffes de retenue (11) permettant de retenir la conduite de fluide (3).

4. Dispositif de raccordement fluidique selon la revendication 3, **caractérisé en ce que** les griffes de retenue (11), en section longitudinale, sont coudées par rapport à une extrémité libre (12) du raccord pour flexible (2).

5. Dispositif de raccordement fluidique selon l'une quelconque des revendications précédentes, **caractérisé en ce que** l'élément de serrage (5) est réalisé sous la forme d'un écrou de serrage qui présente un taraudage intérieur (15) coopérant avec un filetage extérieur (14) d'un corps d'accouplement (13) du dispositif de raccordement fluidique (1).

6. Dispositif de raccordement fluidique selon l'une quelconque des revendications précédentes, **caractérisé en ce que** la bague de serrage (6) est interrompue dans le sens périphérique.

7. Dispositif de raccordement fluidique selon l'une quelconque des revendications précédentes, **caractérisé en ce que** le raccord pour flexible (2) présente une section de serrage (17) avec un diamètre extérieur croissant dans une direction opposée à l'extrémité libre (12) du raccord pour flexible (2).

8. Dispositif de raccordement fluidique selon la revendication 7, **caractérisé en ce que** le diamètre extérieur du raccord pour flexible (2) dans la section de serrage (17) augmente dans la direction opposée à l'extrémité libre (12) avec un gradient de diamètre croissant.

9. Dispositif de raccordement fluidique selon la revendication 7 ou 8, **caractérisé en ce que** le gradient de diamètre du diamètre extérieur sur l'étendue de la section de serrage (17) dans la direction axiale est inférieur à un gradient de diamètre d'un diamètre intérieur de la surface de guidage conique (9).

10. Dispositif de raccordement fluidique selon l'une quelconque des revendications 5 à 9, **caractérisé en ce qu'**un diamètre à fond de filet du taraudage intérieur (15) est inférieur à un plus petit diamètre intérieur de la surface de guidage conique (9).

11. Dispositif de raccordement fluidique selon l'une quelconque des revendications 7 à 10, **caractérisé en ce que** le filetage extérieur (14) est agencé sur un côté du raccord pour flexible (2) opposé à l'extrémité libre (12) et le raccord pour flexible (2) présente une surface de délimitation annulaire (18) dans la direction axiale entre le filetage extérieur (14) et la section de serrage (17).

12. Dispositif de raccordement fluidique selon la revendication 11, **caractérisé en ce que** la bague de serrage (6) est agencée de manière à recouvrir la surface de délimitation (18) dans la direction radiale dans au moins une position.

13. Dispositif de raccordement fluidique selon l'une quelconque des revendications 7 à 12, **caractérisé en ce que** le raccord pour flexible (2) présente une section d'enfichage (16) au niveau de son extrémité libre (12), dans lequel un étagement (19) est formé entre la section d'enfichage (16) et la section de serrage (17) au niveau du raccord pour flexible (2), de sorte que le diamètre extérieur du raccord pour flexible (2) est plus petit dans la section de serrage (17) sur son côté tourné vers la section d'enfichage (16) que dans la section d'enfichage (16) sur son côté tourné vers la section de serrage (17).

14. Dispositif de raccordement fluidique selon la revendication 13, **caractérisé en ce que** le raccord pour flexible (2) est conique dans la section d'enfichage (16).
